# EUROPÄISCHE PATENTSCHRIFT

(11) **EP 2 729 331 B1**
(45) Veröffentlichungstag und Bekanntmachung des Hinweises auf die Patenterteilung: **06.09.2017**
(21) Anmeldenummer: 12758413.4
(22) Anmeldetag: 05.07.2012
(51) Int. Cl.: B60S 3/04

(54) **VORRICHTUNG ZUR REINIGUNG VON ZWEIRÄDERN**
APPARATUS FOR CLEANING TWO WHEELERS
DISPOSITIF DE NETTOYAGE DE VÉHICULES À DEUX ROUES

(30) Priorität: 05.07.2011 DE 102011106752; 27.07.2011 DE 102011052215
(43) Veröffentlichungstag der Anmeldung: 14.05.2014
(73) Patentinhaber: cyb tech UG (haftungsbeschränkt), 50668 Köln (DE)
(72) Erfinder: Sarfert, Stefan, 81547 München (DE)
(74) Vertreter: Oberdorfer, Jürgen
(86) Internationale Anmeldenummer: PCT/EP2012/063177
(87) Internationale Veröffentlichungsnummer: WO 2013/004794

(56) Entgegenhaltungen:
- EP-A2- 2 006 175
- DE-A1-102008 048 814
- DE-C1- 4 325 973
- DE-U1- 29 505 047
- DE-U1- 29 506 873
- US-A1- 2010 307 531

## Beschreibung

Die vorliegende Erfindung betrifft eine Vorrichtung gemäß dem Oberbegriff des Hauptanspruchs.

Mit einem vermehrten Aufkommen von insbesondere hochwertigen Zweirädern steigt der Wunsch nach einem gepflegten Zustand. Ebenso haben Fahrradverleihfirmen bei einem großen Fuhrpark und dessen Einsatz im extremen Gelände großes Interesse an einer Reinigung.

Eine derartige Vorrichtung ist aufgrund der hohen Materialkosten sehr teuer. Beispielsweise sind die Reinigungswalzen sehr groß und können lediglich horizontal am Fahrrad vorbeigeführt werden. Entsprechend ist ebenso ein Verbrauch an Wasser, Reinigungsmitteln und Konservierungsmitteln hoch.

Die DE 295 06 873 U1 offenbart eine Vorrichtung zum Reinigen eines Zweirads, insbesondere eines Fahrrads, mit einer das Zweirad wenigstens seitlich und oberhalb umschließenden Kabine, in der eine, eine Sprüh- und/oder Trocknungseinrichtung beinhaltende, Reinigungseinrichtung angeordnet ist, die wenigstens zwei beidseitig des Zweirads positionierte, rotierbare bürstenartige Reinigungswalzen mit ihnen zugeordneten Sprüh- und/oder Trocknungseinrichtungen umfasst, die gemeinsam mittels eines auf einer parallel zur Zweiradlängsachse verlaufenden Längsschienen bewegbaren Schlittens seitlich entlang des durch eine Halterungsvorrichtung arretierten Zweirads verfahrbar sind, wobei die von außen antreibbaren Räder an vorzugsweise motorisch angetriebenen rotierenden seitlichen Reinigungsbürsten für die Reifen und Felgen vorbeibewegbar sind.

Die US 2010/0307531 A1 offenbart ein System und ein Verfahren zur Reinigung eines zweirädrigen Fahrzeuges beispielsweise eines Fahrrads. Das Fahrradübertragungssystem wird beispielsweise beim Drehen des Hinterrads aktiviert. Dann wird ein Entfettungsmittel von einer Entfettungsmittellösungsquelle mittels einigen oder allen der Düsen auf die entsprechenden Teile des Fahrrads gesprüht. Gleichzeitig rotieren Bürsten.

Die DE 10 2008 048 814 A1 offenbart eine Vorrichtung zur mechanischen Reinigung von Autofelgen aller Art mittels einer bewegten Reinigungsflüssigkeit in einer Reinigungswanne, wobei die Autofelgen in der Reinigungsflüssigkeit durch Kavitation, erzeugt durch Ultraschall-Schwingungserreger, gereinigt werden.

Die DE 43 25 973 C1 offenbart eine Vorrichtung zum Reinigen eines Zweirades, insbesondere eines Fahrrads, mit einer das Zweirad wenigstens seitlich und oberhalb umschließenden Kabine, in der eine, eine Sprüh- und/oder Trocknungseinrichtung beinhaltende, Reinigungseinrichtung angeordnet ist, die wenigstens zwei beidseitig des Zweirads positionierte, rotierbare bürstenartige Reinigungswalzen mit ihnen zugeordneten Sprüh- und/oder Trocknungseinrichtungen umfasst, die gemeinsam mittels eines auf einer parallel zur Zweiradlängsachse verlaufenden Längsschienen bewegbaren Schlittens seitlich entlang des durch eine Halterungsvorrichtung arretierten Zweirads verfahrbar sind.

Die EP 2 006 175 A2 offenbart eine Ausrüstung zum Waschen von Fahrrädern oder Motorrädern mit einer Positionierungsbasis für mindestens ein Fahrrad oder Motorrad, mit einem der Basis zugeordneten Rahmen, der zusammen mit der Basis eine Behälterkammer für das Fahrrad oder Motorrad definiert. Eine Vielzahl von Abgabeeinheiten ist zum Verteilen zumindest eines flüssigen Produkts auf das Fahrrad oder Motorrad zugeordnet.

Die DE 295 05 047 U1 offenbart eine in Form einer Kabine ausgebildeten Vorrichtung zum vollautomatischen Reinigen eines Fahrrades mit einer Rahmenkonstruktion mit einer Türe, einer Nasszelle und einem Werbeträger.

Es ist Aufgabe der Erfindung eine Vorrichtung und ein Verfahren zur Reinigung von Zweirädern, insbesondere von Fahrrädern, derart bereit zu stellen, dass ein Zweirad einfach, kostengünstig und wirksam gereinigt wird. Damit soll entsprechend zeitlich aufeinanderfolgend eine Vielzahl von Zweirädern gereinigt werden können. Eine Vorrichtung soll insbesondere materialsparend herstellbar sein, eine geringe Masse aufweisen, einfach transportierbar sein und eine lange Lebensdauer aufweisen. Ein Verfahren zur Verwendung der Vorrichtung soll einfach und zuverlässig sein. Insbesondere soll ein Verbrauch an Energie und Reinigungsmedien im Verhältnis zu einer Reinigungswirkung klein sein.

Die Aufgabe wird durch eine Vorrichtung mit den Merkmalen gemäß dem Hauptanspruch gelöst.

Gemäß einem Aspekt wird eine Vorrichtung zum Reinigen eines ein erstes Rad mit einer ersten Radrotationsachse und ein zweites Rad mit einer zweiten Radrotationsachse aufweisenden Zweirades, mit einem Gehäuse mit einem Boden, einer Decke, zwei Seitenwänden und einer ersten Stirnwand und einer zweiten Stirnwand und mit einer Reinigungseinrichtung bereitgestellt, die mindestens zwei beidseitig des Zweirades positionierte, rotierbare bürstenartige Reinigungswalzen mit diesen zugeordneten Sprüh- und/oder Trocknungseinrichtungen aufweist, wobei die Reinigungswalzen und die Sprüh- und/oder Trocknungseinrichtungen gemeinsam mittels eines auf einer parallel zu der Zweiradlängsachse verlaufenden Längsschiene bewegbaren Horizontalschlittens seitlich entlang des Zweirades verfahrbar sind. Die Vorrichtung zeichnet sich dadurch aus, dass am Gehäuse eine Raddreheinrichtung fixiert ist, die das erste Rad um die erste Radrotationsachse und das zweite Rad um die zweite Radrotationsachse des in einer Zweirad-Reinigungsposition innerhalb des Gehäuses positionierten Zweirades dreht.

Die Längsschiene ist in Schwerkraftrichtung unterhalb des Bodens des Gehäuses angeordnet und die Decke fixiert das Zweirad, wobei die Decke in einem Bereich entlang einer Gehäuselängsachse in einem Mittelbereich einer Gehäusequerachse zumindest teilweise geöffnet ist und entlang eines Randbereichs des offenen Bereichs zumindest teilweise Bürsten angeordnet sind.

Die Längsschiene ist in Schwerkraftrichtung unterhalb des Bodens des Gehäuses angeordnet und in Schwerkraftrichtung oben fixiert die Decke das Zweirad. Die Decke weist zwei Flügel mit Bürsten auf, die gegen das Zweirad eingeklappt oder geschoben werden.

Ein Zweirad erstreckt sich mit den beiden Rädern und einem Rahmen entlang einer Längsrichtung. Eine Zweiradlängsachse ist eine Symmetrieachse des Zweirades und verläuft bei einem geradeaus orientierten Lenker des Zweirades entlang den beiden Rädern und dem Rahmen.

Durch das Drehen der beiden Räder wird eine zusätzliche Relativbewegung des Zweirades zu den Reinigungswalzen erzeugt, so dass das Zweirad wirksamer gereinigt wird. Die beiden Räder reiben zusätzlich mit einer eigenen Bewegung gegen die Reinigungswalzen. Zudem werden alle Bereiche der beiden Räder gleichmäßig gereinigt.

Gemäß einem Aspekt wird eine Vorrichtung zum Reinigen eines ein erstes Rad mit einer ersten Radrotationsachse und ein zweites Rad mit einer zweiten Radrotationsachse aufweisenden Zweirades, mit einem Gehäuse mit einem Boden, einer Decke, zwei Seitenwänden und einer ersten Stirnwand und einer zweiten Stirnwand und mit einer Reinigungseinrichtung bereitgestellt, die mindestens zwei beidseitig des Zweirades positionierte, rotierbare bürstenartige Reinigungswalzen mit diesen zugeordneten Sprüh- und/oder Trocknungseinrichtungen aufweist, wobei die Reinigungswalzen und die Sprüh- und/oder Trocknungseinrichtungen gemeinsam mittels eines auf einer parallel zu der Zweiradlängsachse verlaufenden Längsschiene bewegbaren Horizontalschlittens seitlich entlang des Zweirades verfahrbar sind. Die Vorrichtung zeichnet sich dadurch aus, dass am Gehäuse eine Reinigungs- und/oder Schmierungseinrichtung fixiert ist, die eine Ritzelkassette und/oder ein Schaltwerk und/oder eine Kette des Zweirades reinigt und/oder schmiert.

Gemäß einem Aspekt wird eine Vorrichtung zum Reinigen eines ein erstes Rad mit einer ersten Radrotationsachse und ein zweites Rad mit einer zweiten Radrotationsachse aufweisenden Zweirades, mit einem Gehäuse mit einem Boden, einer Decke, zwei Seitenwänden und einer ersten Stirnwand und einer zweiten Stirnwand und mit einer Reinigungseinrichtung bereitgestellt, die mindestens zwei beidseitig des Zweirades positionierte, rotierbare bürstenartige Reinigungswalzen mit diesen zugeordneten Sprüh- und/oder Trocknungseinrichtungen aufweist, wobei die Reinigungswalzen und die Sprüh- und/oder Trocknungseinrichtungen gemeinsam mittels eines auf einer parallel zu der Zweiradlängsachse verlaufenden Längsschiene bewegbaren Horizontalschlittens seitlich entlang des Zweirades verfahrbar sind. Die Vorrichtung zeichnet sich dadurch aus, dass die Reinigungswalzen und die Sprüh- und/oder Trocknungseinrichtungen gemeinsam mittels mindestens zweier auf mindestens zwei vertikalen Schienen bewegbaren Vertikalschlitten seitlich vertikal entlang des Zweirades verfahrbar sind.

Durch eine zusätzlich vertikale Verfahrbarkeit der Reinigungseinrichtung können die Reinigungswalzen und damit die gesamte Vorrichtung im Vergleich zum Stand der Technik bei einer gleichen zu reinigenden Fläche eines Zweirades kleiner ausgebildet werden. Damit verringert sich der Materialverbrauch zur Herstellung der Vorrichtung. Während des Betriebes werden weniger Wasser, Reinigungs- und Konservierungsmittel benötigt. Das Zweirad, kann gezielt an verschmutzten Stellen gereinigt, getrocknet und konserviert werden. Ein Energieverbrauch zur Bewegung der Reinigungseinrichtung wird verringert.

Weitere vorteilhafte Ausgestaltungen werden in Verbindung mit den Unteransprüchen beansprucht.

Gemäß einer vorteilhaften Ausgestaltung kann die Raddreheinrichtung eine Mehrzahl von entlang der Zweiradlängsachse in dem Boden des Gehäuses um quer zur Zweiradlängsachse orientierte Rollenrotationsachsen drehend gelagerte motorangetriebene Rollen aufweisen, die das erste und das zweite Rad tragen und drehen.

Gemäß einer vorteilhaften Ausgestaltung können die Rollen in einer entlang der Zweiradlängsachse in dem Boden des Gehäuses ausgebildeten Spurrinne positioniert sein, entlang der das Zweirad geführt und in der ein Reinigungsmedium aufgenommen ist.

Gemäß einer vorteilhaften Ausgestaltung kann die Spurrinne mindestens einen Ultraschallerzeuger, insbesondere einen Piezoaktor, aufweisen, der mittels Ultraschallenergie in das aufgenommene Reinigungsmedium eingetauchte Bereiche des ersten und des zweiten Rades reinigt.

Gemäß einer vorteilhaften Ausgestaltung kann am Gehäuse eine Reinigungs- und/oder Schmierungseinrichtung fixiert sein, die eine Ritzelkassette und/oder ein Schaltwerk und/oder eine Kette des Zweirades reinigt und/oder schmiert.

Gemäß einer vorteilhaften Ausgestaltung kann die Reinigungs- und/oder Schmierungseinrichtung eine in dem Boden des Gehäuses auf einer Seite der ersten Stirnwand um eine quer zur Zweiradlängsachse orientierte Walzenrotationsachse drehend gelagerte mittels eines Motors angetriebene Reinigungs- und/oder Schmierungswalze aufweisen, mit der die Ritzelkassette und/oder das Schaltwerk und/oder die Kette des rückwärts von der Seite der zweiten Stirnwand in das Gehäuse eingebrachten Zweirades mechanisch in Kontakt gebracht ist/sind. Die Reinigungs- und/oder Schmierungswalze ist vorteilhaft von der zweiten Stirnwand aus betrachtet links von der Spurrinne angeordnet.

Gemäß einer vorteilhaften Ausgestaltung kann die Reinigungs- und/oder Schmierungseinrichtung einer am Gehäuse um eine quer zur Zweiradlängsachse orientierte Walzenrotationsachse drehend gelagerte mittels eines Motors angetriebene Reinigungs- und/oder Schmierungswalze aufweisen, die mit der Ritzelkassette und/oder dem Schaltwerk und/oder der Kette des vorwärts von der Seite der zweiten Stirnwand in das Gehäuse eingebrachten Zweirades bei geschlossener zweiter Stirnwand mechanisch in Kontakt gebracht ist/sind.

Gemäß einer vorteilhaften Ausgestaltung können jeweils zwei zueinander achsensymmetrisch zur Zweiradlängsachse beidseitig des Zweirades positionierte Reinigungswalzen an einem Querelement des Horizontalschlittens derart drehbar gelagert sein, dass sich ein Abstand der beiden Rotationsachsen der Reinigungswalzen zueinander in Schwerkraftrichtung nach unten verkleinert.

Gemäß einer vorteilhaften Ausgestaltung können die Reinigungswalzen und die Sprüh- und/oder Trocknungseinrichtungen gemeinsam mittels mindestens zweier auf mindestens zwei vertikalen Schienen bewegbaren Vertikalschlitten seitlich vertikal entlang des Zweirades verfahrbar sein.

Gemäß einer vorteilhaften Ausgestaltung können die vertikalen Schienen mittels eines Querelements an dem Horizontalschlitten fixiert sein.

Gemäß einer weiteren vorteilhaften Ausgestaltung können die Reinigungswalzen und die Sprüh- und/oder Trocknungseinrichtungen in einer zueinander gleichen vertikalen Position horizontal entlang des Zweirades verfahrbar sind.

Gemäß einer weiteren vorteilhaften Ausgestaltung kann eine am Gehäuse und/oder an der Reinigungseinrichtung fixierte Raddreheinrichtung zum Drehen des ersten Rades um die erste Radrotationsachse und/oder des zweiten Rades um die zweite Radrotationsachse des in eine Zweirad-Reinigungsposition innerhalb des Gehäuses bewegten Zweirades vorgesehen sein. Durch die zusätzliche Raddreheinrichtung kann ein jeweiliges Rad zusätzlich relativ zu der Reinigungseinrichtung bewegt werden, so dass Bestandteile des Zweirades, insbesondere Mantel, Felgen und Speichen im Vergleich zum Stand der Technik wirksamer gereinigt werden können.

Gemäß einer weiteren vorteilhaften Ausgestaltung kann die Raddreheinrichtung jeweils für ein Rad mindestens eine motorangetriebene, um eine jeweilige Rollenrotationsachse drehbare Rolle aufweist, die in der Zweirad-Reinigungsposition mit dem jeweiligen Rad in Reibkontakt bringbar ist.

Gemäß einer weiteren vorteilhaften Ausgestaltung kann der Boden des Gehäuses eine entlang einer Gehäuselängsachse sich erstreckenden Spurrinne in einem Mittelbereich einer Gehäusequerachse zum Führen des Zweirades bei der Bewegung in die Zweirad-Reinigungsposition aufweisen, wobei die Raddreheinrichtung innerhalb der Spurrinne positioniert sein kann.

Gemäß einer weiteren vorteilhaften Ausgestaltung kann der Boden zusammen mit der Spurrinne einen Auffangbehälter zur Aufnahme eines von der Sprüheinrichtung abgegebenen Sprühmediums ausbilden.

Gemäß einer weiteren vorteilhaften Ausgestaltung kann die Spurrinne mindestens einen Ultraschallerzeuger, insbesondere einen Piezoaktor, zur Erzeugung von Ultraschallenergie zur Reinigung von von der Spurrinne umfassten Bereichen des ersten und zweiten Rades in dem aufgenommenen Sprühmedium aufweisen.

Gemäß einer weiteren vorteilhaften Ausgestaltung kann am Gehäuse eine Reinigungs- und/oder Schmierungeinrichtung zum Reinigen und/oder Schmieren einer Ritzelkassette und/oder eines Schaltwerkes und/oder einer Kette des Zweirades fixiert sein.

Gemäß einer weiteren vorteilhaften Ausgestaltung kann die Reinigungs- und/oder Schmierungseinrichtung eine mittels eines Motors zum Reinigen und/oder Schmieren angetriebene bürstenartige Reinigungs- und/oder Schmierungswalze aufweisen, die mittels einer Positionierungseinheit von einer Ausgangsposition in eine Reinigungs-/Schmierungsposition in Kontakt mit der Ritzelkassette und/oder dem Schaltwerk und/oder der Kette bewegbar ist.

Gemäß einer weiteren vorteilhaften Ausgestaltung kann die Positionierungseinheit einen Bereich einer der Stirnwände aufweisen, der zum Bewegen des Zweirades in das Gehäuse geöffnet wird und beim Schließen die Reinigungs- und/oder Schmierungswalze mechanisch in die Reinigungs-/Schmierungsposition bewegt und in dieser hält.

Die Erfindung wird anhand von Ausführungsbeispielen in Verbindung mit den Figuren näher beschrieben. Es zeigen:
- Figur 1: eine Seitenansicht eines erfindungsgemäßen Ausführungsbeispiels;
- Figur 2: eine Vorderansicht des Ausführungsbeispiels;
- Figur 3: ein Ausführungsbeispiel eines einem Rad zugeordneten Bestandteils einer erfindungsgemäßen Raddreheinrichtung;
- Figuren 4a; 4b: ein Ausführungsbeispiel einer erfindungsgemäßen Positionierungseinheit in einer Ausgangsposition;
- Figuren 5a; 5b: das Ausführungsbeispiel einer erfindungsgemäßen Positionierungseinheit in einer Reinigungs-/Schmierungsposition;
- Figur 6a; 6b: ein Ausführungsbeispiel einer Reinigungsund/oder Schmierungseinrichtung;
- Figur 7: ein Ausführungsbeispiel einer erfindungsgemäßen Vorrichtung mit dargestelltem Gehäuse;
- Figur 8: ein Ausführungsbeispiel eines erfindungsgemäßen Reinigungsmediensystems ;
- Figur 9: eine Seitenansicht eines weiteren Ausführungsbeispiels einer erfindungsgemäßen Vorrichtung.

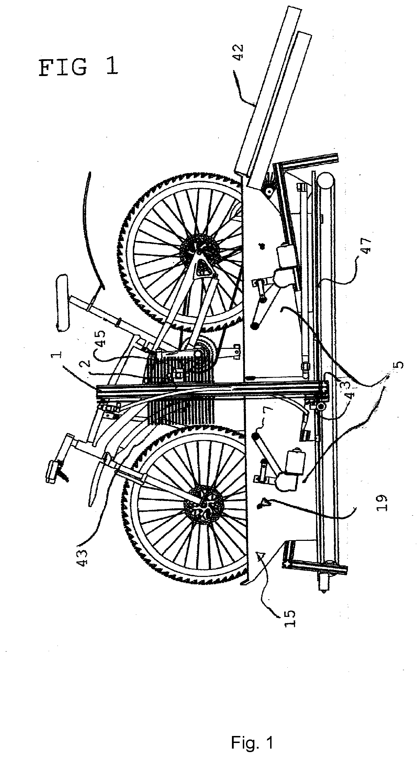

Figur 1 zeigt eine Seitenansicht eines Ausführungsbeispiels einer erfindungsgemäßen Vorrichtung. Ein zu reinigendes Zweirad wurde in einer Reinigungseinrichtung zwischen zwei beidseitig des Zweirades positionierten, rotierbaren bürstenartigen Reinigungswalzen 43 mit diesen zugeordneten Sprüh- und/oder Trocknungseinrichtungen 45 positioniert. Die Reinigungseinrichtung kann zusätzlich zwei vertikale Schienen 1 aufweisen, entlang denen bewegbare Vertikalschlitten 2 vertikal seitlich entlang des Zweirades verfahrbar sein können. An den Vertikalschlitten 2 können die rotierbaren bürstenartige Reinigungswalzen 43 mit diesen zugeordneten Sprüh- und/oder Trocknungseinrichtungen 45 befestigt sein. Alternativ ist ebenso eine Ausführungsform ohne vertikale Verfahrbarkeit der bürstenartigen Reinigungswalzen 43 vom Schutzumfang dieser Anmeldung umfasst. Beide vertikale Schienen 1 sind an einem horizontalen Querelement 3, beispielsweise einer horizontalen Querschiene, befestigt, die ebenso mittels eines horizontal bewegbaren Horizontalschlittens 4 entlang einer parallel zu einer Zweiradlängsachse verlaufenden Längsschiene 47 verfahrbar ist. Die vertikalen Schienen 1 sind bevorzugt an dem Horizontalschlitten 4 fixiert. Dies wird bevorzugt mittels des Querelements 3 ausgebildet. Andere alternative Ausführungsformen sind ebenso vom Schutzumfang dieser Anmeldung umfasst. Beispielweise können vertikale Schienen 1 jeweils einzeln horizontal verfahrbar sein. Schlitten 2 und 4 können bevorzugt mittels ansteuerbarer Elektromotoren bewegt werden. Unterhalb des in eine Zweirad-Reinigungsposition bewegten Zweirades ist mindestens eine Rolle 7 einer Raddreheinrichtung 5 angeordnet, mit der ein erstes und/oder ein zweites Rad des Zweirades gedreht werden. Die Raddreheinrichtung 5 weist beispielweise vier Rollen 7 auf, auf denen die beiden Räder des Zweirades in der Zweirad-Reinigungsposition aufliegen, getragen und gedreht werden. Des Weiteren ist in Figur 1 eine Spurrinne 15 dargestellt, in der das Zweirad in der Zweirad-Reinigungsposition aufgenommen ist. Die Spurrinne 15 ist ein länglicher Behälter, der eine Spur ausbildet, entlang der das Zweirad in die Zweirad-Reinigungsposition bewegt, beispielsweise von einer Bedienperson geschoben, wird. Die Spurrinne 15 ist mindestens eine Radbreite eines Rades eines Zweirades breit. Die Spurrrinne 15 kann zusätzlich so geformt sein, das in einem Längsschnitt zwei Kreissegmente ausgebildet sind, durch die die beiden Räder des Zweirades aufgenommen sind. Innerhalb der beiden Kreissegmente sind Rollen 7 und ein Reinigungsmedium aufgenommen. Ohne Rollen 7 kann die Spurrinne 15 das Zweirad in der Zweirad-Reinigungsposition stabil halten. Alternativ kann die Spurrinne 15 eine Trichterform ausbilden, wobei einen Aufnahmebehälter erzeugende Wände der Spurrinne 15 Reinigungsmedien in Schwerkraftrichtung nach unten in eine Trichteröffnung führen. Die Trichteröffnung kann beispielsweise in der Mitte der Längsachse der Spurrinne 15 auf einem in Schwerkraftrichtung untersten Niveau ausgebildet sein. Über der Trichteröffnung kann ein Sieb In der Zweirad-Reinigungsposition befindet sich das Zweirad entlang der Zweiradlängsachse in Schwerkraftrichtung oberhalb der Spurrinne 15. Die Raddreheinrichtung 5 weist gemäß diesem Ausführungsbeispiel für jedes Rad des Zweirades jeweils eine direkt motorangetriebene Rolle 7 auf, die besonders vorteilhaft innerhalb der Spurrinne 15 positioniert ist, wobei eine Rotationsachse einer Rolle 7 jeweils quer zu einer Längsachse der Spurrinne 15 orientiert ist. In der Zweirad-Reinigungsposition ist eine Radrotationsachse eines Rades des Zweirades beispielsweise jeweils parallel zur Rotationsachse der dieses Rad kontaktierenden Rollen 7 ausgerichtet. Bezugszeichen 19 stellt einen an der Spurrinne 15 befestigten Ultraschallerzeuger, insbesondere Piezoaktor dar, der in ein Rad umgebendes Sprüh- oder Reinigungsmedium Ultraschallenergie zur zusätzlichen Reinigung einbringt. Die Spurrinne 15 kann optional mindestens einen Ultraschallerzeuger 19, insbesondere einen Piezoaktor, zur Erzeugung von Ultraschallenergie zur Reinigung von von der Spurrinne 15 umfassten Bereichen des ersten und/oder zweiten Rades in dem aufgenommenen Sprühmedium aufweisen. Gemäß diesem Ausführungsbeispiel werden vier Piezoaktoren verwendet.

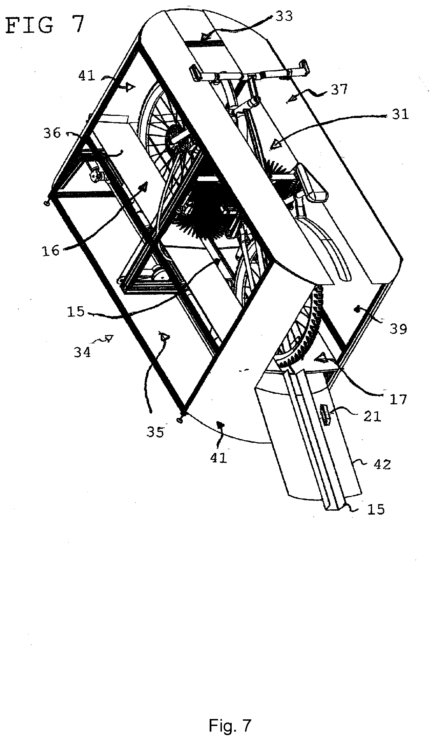

Figur 1 zeigt die Vorrichtung zum Reinigen eines ein erstes Rad mit einer ersten Radrotationsachse und ein zweites Rad mit einer zweiten Radrotationsachse aufweisenden Zweirades, wobei zusätzlich ein in Figur 7 dargestelltes Gehäuse mit einem Boden, einer Decke, Seitenwänden und Stirnwänden ausgebildet ist. Die Spurrinne 15 ist ein Bestandteil des Bodens. Auf der rechten Seite der Figur 1 ist eine Rampe 42 dargestellt, die ein Bereich oder Teil einer hinteren Stirnwand ist, der zum Bewegen des Zweirades in das Gehäuse ausgeklappt ist. Der Bereich wurde dazu um eine Achse aus einer Ebene der hinteren Stirnwand herausgedreht. Dieser Bereich ist hier als eine Rampe 42 gemäß Figur 1 in einer aufgeklappten Position dargestellt. Die Rampe 42 kann einen Querschnittsverlauf aufweisen, der dem der Spurrinne 15 entspricht. Das Zweirad kann auf einfache Weise von einer Bedienperson entlang der aufgeklappten Rampe 42 in eine Zweirad-Reinigungsposition innerhalb des Gehäuses bewegt werden.

Die Reinigungseinrichtung, die die mindestens zwei beidseitig des Zweirades positionierten, rotierbaren bürstenartigen Reinigungswalzen 43 mit diesen zugeordneten Sprüh- und/oder Trocknungseinrichtungen 45 aufweist, wobei die Reinigungswalzen 43 und die Sprüh- und/oder Trocknungseinrichtungen 45 gemeinsam mittels eines auf einer parallel zu der Zweiradlängsachse verlaufenden Längsschiene 47 bewegbaren Horizontalschlittens 4 seitlich entlang des Zweirades verfahrbar sind und wobei die Reinigungswalzen 43 und die Sprüh- und/oder Trocknungseinrichtungen 45 gemeinsam mittels mindestens zweier auf mindestens zwei vertikalen Schienen 1 bewegbaren Vertikalschlitten seitlich vertikal entlang des Zweirades verfahrbar sind, weist für eine Bereitstellung von Rotationen und von Translationen, insbesondere von Reinigungswalzen 43 und/oder eine vertikale und/oder horizontale Translation von Reinigungswalzen 43, Sprüh- und/oder Trocknungseinrichtungen 45 bevorzugt Elektromotoren auf. Ebenso werden bevorzugt elektrische Pumpen, insbesondere für Sprüheinrichtungen 45, sowie elektrische Heiz- und Luftstromerzeugungseinrichtungen, insbesondere für Trocknungseinrichtungen 45, verwendet. Dabei kann eine Ansteuerung aller elektrischen Einrichtungen und Einheiten mittels mindestens einer entsprechenden Ansteuereinrichtung manuell oder halbautomatisch oder vollautomatisch ausgeführt werden. Gemäß diesem einfachen und wirksamen Ausführungsbeispiel werden die Reinigungswalzen 43 und die Sprüh- und/oder Trocknungseinrichtungen 45 in einer zueinander gleichen vertikalen Position entlang des Zweirades verfahren. Translatorische und/oder rotatorische Bewegungen können alternativ oder kumulativ manuell oder beispielsweise mittels Verwenden einer Handsteuereinrichtung halbautomatisch ausgeführt werden.

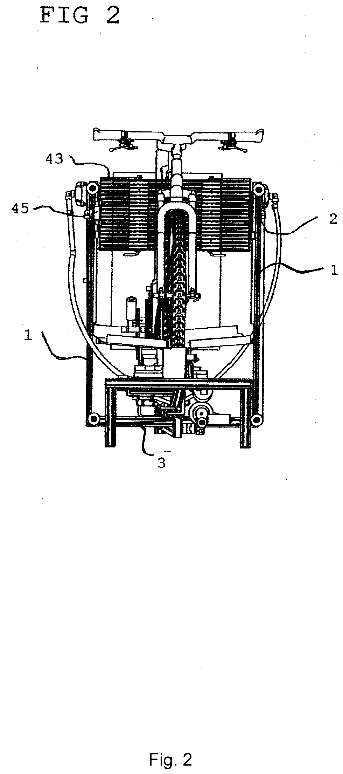

Figur 2 zeigt eine Vorderansicht zu der Darstellung gemäß Figur 1. Die Reinigungseinrichtung mit den zwei beidseitig des Zweirades positionierten, rotierbaren bürstenartigen Reinigungswalzen 43 und mit diesen zugeordneten Sprüh- und/oder Trocknungseinrichtungen 45 ist hier insbesondere in Bezug auf deren vertikale Verfahrbarkeit dargestellt. Ein horizontales Querelement 3 trägt zwei vertikale Schienen 1 zur Führung der Reinigungseinrichtung. Die Sprüh- und/oder Trocknungseinrichtung 45 wirkt gemäß dem bevorzugten Ausführungsbeispiel von den dem Zweirad abgewandten Seiten der Reinigungswalzen 43, wobei eine Wirkrichtung jeweils in Richtung des Zweirades geschaffen ist. Beispielsweise werden Sprühmedien, insbesondere Wasser, Reinigungsmittel und/oder Konservierungsmittel, zuerst auf die Walzen und danach mittels diesen, also indirekt auf das Zweirad aufgebracht. Damit kann ein sofortiges Abtropfen des Sprühmediums vom Zweirad verhindert und die Menge des verwendeten Sprühmediums wirksam im Vergleich zum Stand der Technik verkleinert werden.

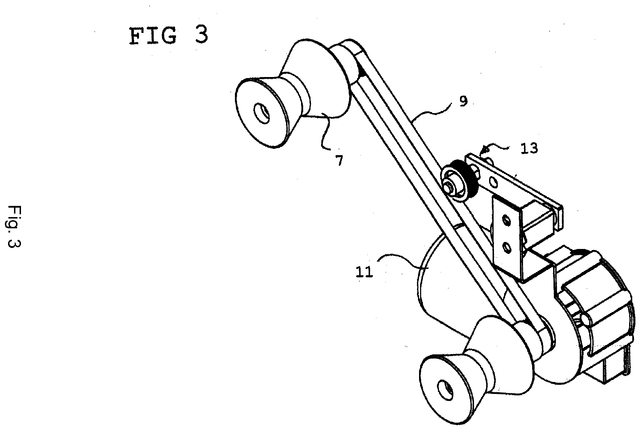

Figur 3 zeigt ein Ausführungsbeispiel eines einem Rad zugeordneten Bestandteils einer erfindungsgemäßen Raddreheinrichtung 5. Ein Motor 11 treibt mittels eines Getriebes eine Rolle 7 direkt an, die mittels eines Laufriemens 9 wiederum eine zweite Rolle 7 antreibt. Der Laufriemen 9 kann mittels einer Spanneinrichtung 13 beaufschlagt sein, damit kein Schlupf auftritt. Die Rollen 7 können zur vorteilhaften Führung der Räder zu einem Rollenlängsmittelbereich hin verjüngt sein. Auf jeweils eine gemäß Figur 3 dargestellte Anordnung kann jeweils ein Rad eines Zweirades angeordnet werden. Die Raddreheinrichtung 5 zum Drehen des ersten Rades um die erste Radrotationsachse und/oder des zweiten Rades um die zweite Radrotationsachse des in eine Zweirad-Reinigungsposition innerhalb des Gehäuses bewegten Zweirades ist bevorzugt am Gehäuse der Vorrichtung fixiert. Eine Raddreheinrichtung 5 weist jeweils für ein Rad mindestens eine antreibbare, um eine jeweilige Rollenrotationsachse drehbare Rolle 7 auf, die mit dem jeweiligen Rad in Reibkontakt bringbar ist. Die jeweiligen Rollen 7 sind jeweils in einem Umfangsbereich des jeweiligen Rades positionierbar, wenn das Zweirad in einer Zweirad-Reinigungsposition innerhalb eines Gehäuses 34 positioniert wurde. Vorteilhaft werden die Räder beim Schieben des Zweirades in die Zweirad-Reinigungsposition durch eine Bedienperson direkt in Reibkontakt mit den Rollen 7 gebracht, die danach nicht zusätzlich translatorisch zu den Rädern bewegt werden müssen. Die Rollenrotationsachsen der Rollen 7 sind bevorzugt jeweils zu der dazugehörigen Radrotationsachse in der Zweirad-Reinigungsposition parallel positioniert oder positionierbar. Zur wirksamen Führung der Räder können sich die Durchmesser der Rollen 7 entlang deren Rollenrotationsachen von Rollenstirnseiten zu deren Rollenmitte verkleinern. Beispielsweise kann jede Rolle 7 jeweils direkt mittels eines Antriebes gedreht werden. Die Raddreheinrichtung kann gemäß dem in Figur 3 dargestellten Ausführungsbeispiel jeweils für ein Rad mindestens zwei der Rollen 7 aufweisen. Die jeweils einem Rad zugeordneten Rollen 7 können rotatorisch miteinander gekoppelt sein und gemeinsam mittels eines Antriebes, insbesondere eines Motors 11, gedreht werden. Dabei kann der Antrieb eine der einem jeweiligen Rad zugeordneten Rollen 7 direkt antreiben. Bei einer Verwendung von zwei jeweils einem Rad zugeordneten Rollen 7 gemäß dem Ausführungsbeispiel gemäß Figuren 1 und 3, sind diese Rollen 7 zueinander vertikal versetzt, wobei die in Schwerkraftrichtung oberen Rollen von den unteren Rollen aus gesehen in Richtung zu einer Mitte einer Längsachse eines Gehäuses 34 einer Vorrichtung positioniert sind. Die jeweils einem Rad zugeordneten Rollen 7 sind gemäß Figur 3 jeweils mittels eines Laufriemens 9 rotatorisch miteinander gekoppelt, der mittels einer Spanneinrichtung 13 mechanisch vorgespannt ist. Die Raddreheinrichtung 5 ist bevorzugt in einem gemäß Figur 7 dargestellten Boden 36 eines Gehäuses 34 einer erfindungsgemäßen Vorrichtung in Schwerkraftrichtung unterhalb des ersten und des zweiten Rades eines Zweirades fixiert. Der Boden 36 des Gehäuses 34 weist bevorzugt eine entlang einer Gehäuselängsachse sich erstreckenden Spurrinne 15 in einem Mittelbereich einer Gehäusequerachse zum Führen des Zweirades bei einer Bewegung eines Zweirades in die Zweirad-Reinigungsposition auf, wobei die Rollen 7 der Raddreheinrichtung 5 bevorzugt innerhalb der Spurrinne 15 derart positioniert sind, dass eine Drehachse einer Rolle 7 jeweils quer zu einer Längsachse der in einem Boden 36 eines Gehäuses 34 erzeugten Spurrinne 15 drehbar gelagert fixiert ist.

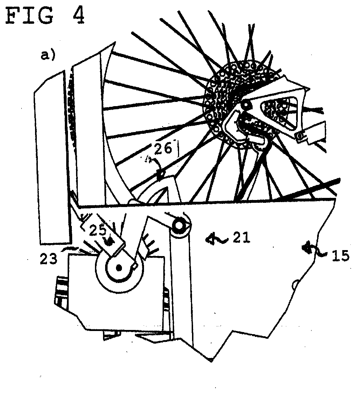

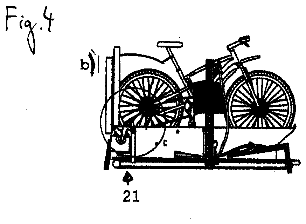

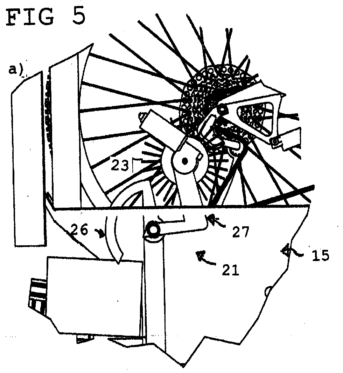

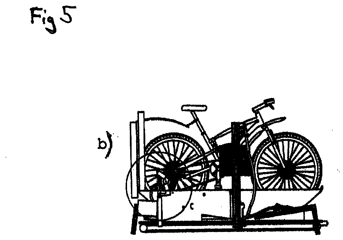

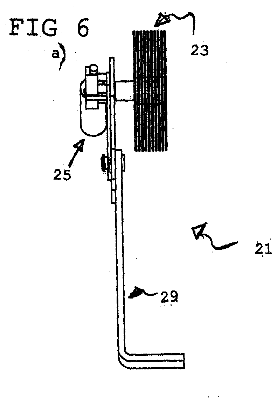

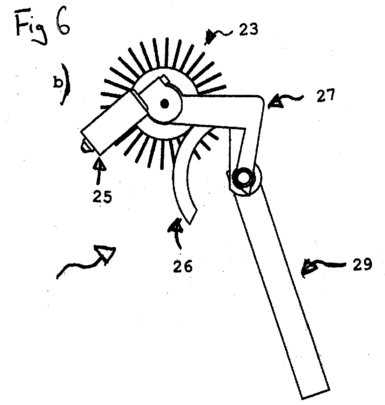

Figuren 4a bis 6b zeigen Ansichten eines Ausführungsbeispiels einer erfindungsgemäßen Reinigungs- und/oder Schmierungeinrichtung 21 zum Reinigen und/oder Schmieren eines hinteren Gangschaltungszahnkranzes, der ebenso als Ritzelkassette bezeichnet werden kann, eines Schaltwerkes und/oder einer Zweiradkette. Figuren 4a und 4b zeigen eine Ausgangsposition, aus der eine bürstenartige Reinigungs- und/oder Schmierungswalze 23 in eine Reinigungs/Schmierungsposition bewegt werden muss, die Figuren 5a und 5b darstellen. Figuren 6a und 6b zeigen die Komponenten der Reinigungs- und/oder Schmierungeinrichtung 21 in einer Draufsicht und in einer Seitenansicht. Diese Komponenten sind die bürstenartige Reinigungs- und/oder Schmierungswalze 23, die mittels eines Motors 25 über ein Getriebe, beispielweise ein Schneckengetriebe, drehbar ist. Beim Drehen der bürstenartigen Reinigungs- und/oder Schmierungswalze 23 dreht diese sich im Kontakt mit einem Kurvenlinienmaterial 26, so dass die bürstenartige Reinigungs- und/oder Schmierungswalze 23 sich aus der Ausgangsposition gemäß Figuren 4a und 4b entlang dem Kurvenlinienmaterial in Schwerkraftrichtung nach oben bewegen kann. Die bürstenartige Reinigungs- und/oder Schmierungswalze 23, der Motor 25 und das Getriebe sind an einem Ende eines Hebelarmmaterial 27 fixiert, dessen anderes Ende an einem länglichen Materialstreifen oder einem Standfuss 29 drehbar fixiert ist. Dieser ist an einem Gehäuse der Vorrichtung, insbesondere der Spurrinne 15 fixiert. Gemäß dieser Anordnung können die bürstenartige Reinigungs- und/oder Schmierungswalze 23, der Motor 25 und das Getriebe aus der Ausgangspositon entlang dem Kurvenlinienmaterial über einen Scheitelpunkt des Kurvenlinienmaterials hinaus elektrisch derart gedreht werden, dass die Reinigungs- und/oder Schmierungseinrichtung 21 in die Reinigungsposition bewegt und mittels deren Gewicht stabil dort gehalten werden kann. Dabei drückt das Gewicht gegen zu reinigende Hinterradbestandteile, wie es beispielweise Gangschaltungszahnkränze, und/oder eine zu reinigende Umlenkrollen und/oder Kette sein können. Das Hebelarmmaterial 27 kann beispielweise einen Winkel aufweisen.

Grundsätzlich ist eine Reinigungs- und/oder Schmierungeinrichtung 21 zum Reinigen und/oder Schmieren einer Ritzelkassette, eines Schaltwerkes und/oder einer Kette an einem Gehäuse 34 einer erfindungsgemäßen Vorrichtung fixiert. Die Reinigungs- und/oder Schmierungseinrichtung 21 weist eine mittels eines Motors 25 drehbare bürstenartige Reinigungs- und/oder Schmierungswalze 23 auf. Mittels einer Positionierungseinrichtung zum Bewegen der bürstenartigen Reinigungs- und/oder Schmierungswalze von der Ausgangsposition in die Reinigungs-/Schmierungsposition wird die Reinigungs- und/oder Schmierungseinrichtung 21 in mechanischem Kontakt mit der Ritzelkassette, des Schaltwerkes und/oder der Kette gebracht, nachdem, von der Reinigungs- und/oder Schmierungseinrichtung 21 ungehindert, ein Zweirad in eine Zweirad-Reinigungsposition innerhalb des Gehäuses bewegt wurde. Nach dem Reinigen und/oder Schmieren wird die Reinigungs- und/oder Schmierungseinrichtung 21 wieder in deren Ausgangsposition zurück bewegt. Dies kann einfach gleichzeitig mittels einem durch eine Bedienperson ausgeführten Bewegen des gereinigten und/oder geschmierten Zweirades von der Zweirad-Reinigungsposition aus dem Gehäuse heraus erfolgen.

Gemäß dem Ausführungsbeispiel nach Figuren 4a bis 6b weist die Positionierungseinrichtung den Motor 25 auf, der die Reinigungs- und/oder Schmierungswalze 23 zusätzlich von der Ausgangsposition entlang eines Kurvenlinienmaterials 26 in die Reinigungsposition und/oder Schmierungsposition bewegt. Die Reinigungs- und/oder Schmierungswalze 23 und der Motor 25 sind beispielsweise an einem Ende eines um eine Rotationsachse drehbar gelagerten Hebelarmmaterials 27 fixiert und beide drücken in der Reinigungs-/Schmierungsposition mit deren Gewichtskraft gegen die Ritzelkassette und/oder das Schaltwerk und/oder die Kette.

Figur 7 zeigt ein Ausführungsbeispiel einer erfindungsgemäßen Vorrichtung mit dargestelltem Gehäuse. Ein Gehäuse 34 mit einem Boden 36, einer Decke 37, zwei Seitenwänden 39 und zwei Stirnwänden 41 umgibt ein zu reinigendes Zweirad. Das Gehäuse 34 hält ein Sprühmedium innerhalb des Gehäuses 34. Auf diese Weise kann das Sprühmedium in einem Kreislauf gehalten und wiederverwendet werden. Des Weiteren kann eine Bedienperson vor einem Besprühen mit dem Sprühmedium geschützt werden. Zusätzlich kann das Gehäuse 34 schalldämpfend ausgeführt sein. Ein Mittelbereich 31 der Decke 37 kann gemäß dieser Ausführungform teilweise geöffnet sein. Die Decke 37 ist in einem Bereich entlang einer Gehäuselängsachse in einem Mittelbereich 31 einer Gehäusequerachse zumindest teilweise geöffnet. Auf diese Weise können beliebige Zweiräder mit beliebigen Höhen in das Gehäuse 34 eingebracht oder bewegt werden. Entlang eines Randbereichs des offenen Bereiches sind zumindest teilweise Bürsten 33 angeordnet. Der gesamte geöffnete Bereich der Decke 37 kann vollständig von Bürsten 33 ausgefüllt sein. Der offene Deckenbereich kann damit ebenso vollständig abgedeckt werden. Ein eingebrachtes Zweirad kann zusätzlich gehalten und Lackschäden können vermieden werden. Das Zweirad steht in einer Spurrinne 15, die zusammen mit zwei abgeschrägten Seitenflächen 16 einen Auffangbehälter 17 zur Aufnahme des Sprühmediums ausbilden. Der Boden 36 bildet zusammen mit der Spurrinne 15 einen Auffangbehälter 17 zur Aufnahme eines Sprühmediums aus. Eine hintere Stirnwand 41 weist einen aufklappbaren Bereich, insbesondere in Form einer Rampe 42, auf. Im aufgeklappten Zustand kann ein Zweirad entlang einer Spurrinne 15 der Rampe 42 in das Gehäuse eingebracht werden. An der Rampe 42 kann eine lediglich schematisch dargestellte Reinigungs- und/oder Schmierungseinrichtung 21 fixiert sein. Daraus ergibt sich eine Alternative zu einer Positionierungseinrichtung gemäß den Figuren 4a bis 5b.

Gemäß dieser Alternative weist die Positionierungseinrichtung einen Bereich einer zweiten Stirnwand 41b auf, der zum Einbringen eines Zweirades in das Gehäuse geöffnet wird und beim Schließen dieses Bereichs die Reinigungs- und/oder Schmierungswalze 23 mechanisch in die Reinigungs-/Schmierungsposition bewegt und dort hält. Beim Öffnen dieses Bereichs, der beispielsweise als mit einer Spurrinne 15 erzeugte Rampe 42 ausgebildet ist, wird die Reinigungs- und/oder Schmierungswalze 23 gleichzeitig zurück in deren Ausgangsposition bewegt, in der die Reinigungs- und/oder Schmierungswalze 23 ein Entfernen des Zweirades aus der Vorrichtung nicht behindert und kumulativ gereinigt sowie mit einem Schmiermittel beaufschlagt werden kann.

Ein Sprühmedium oder Reinigungsmedium kann beispielsweise Wasser und/oder ein Reinigungs- und/oder ein Konservierungsmittels sein. Dieses kann am Boden 36 gesammelt und der Sprüheinrichtung 45 wieder zugeführt werden, so dass jeweils ein geschlossener Kreislauf geschaffen werden kann. Zur Unterstützung einer Reinigung durch eine Bedienperson kann optional mindestens eine Seitenwand 35 zumindest teilweise transparent ausgebildet sein. Zumindest eine der Seitenwände 35 kann optional zumindest teilweise transparent ausgebildet sein. Eine erfindungsgemäße Reinigungseinrichtung, eine Raddreheinrichtung 5, ein Ultraschallerzeuger 19 und die Reinigungs- und/oder Schmiereinrichtung 21 können mittels einer Steuereinrichtung zu deren Betrieb jeweils elektrisch angesteuert werden. Alle Elektromotoren können optional derart angesteuert werden, dass diese deren jeweilige Drehrichtungen ändern. Es wird bei einem in deren Zweirad-Reinigungsposition positionierten Zweirad die Reinigungseinrichtung in horizontaler und/oder vertikaler Richtung verfahren, dreht Raddreheinrichtung 5 das erste und/oder das zweite Rad, reinigt der aktivierte Ultraschallerzeuger 19 und die Reinigungs- und/oder Schmierungseinrichtung 21 reinigt und/oder schmiert in deren Reinigungsposition. Die Reinigungseinrichtung, die Raddreheinrichtung 5, der Ultraschallerzeuger 19 und/oder die Reinigungs- und/oder Schmiereinrichtung 21 können jeweils mittels einer Steuereinrichtung zu deren Betrieb optional vollautomatisch oder halbautomatisch elektrisch angesteuert werden. Ebenso ist eine Ausführungsform der Erfindung umfasst, bei der die Reinigungseinrichtung manuell horizontal und/oder vertikal verfahren oder bewegt wird.

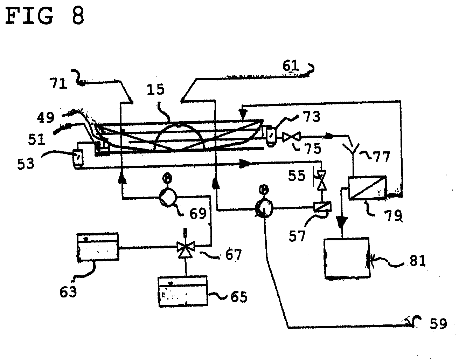

Figur 8 zeigt ein erfindungsgemäßes Ausführungsbeispiel eines Reinigungsmediumssystems. In einem Aufnahmebehälter im Boden 36 eines Gehäuses 34 einer erfindungsgemäßen Vorrichtung, der insbesondere als längliche Spurrinne 15 mit mindestens einer Radbreite und einer beispielsweise 20 Liter Volumen bereitstellenden Tiefe ausgebildet ist, sind die Reinigungsmedien aufgenommen. Es wird ein Grundkreislauf folgendermaßen geschaffen. Der Aufnahmebehälter weist auf einem vorgegebenen Niveau einen Überlauf 49 auf, von dem ein Oberflächensauger 51, der ebenso als Skimmer bezeichnet werden kann, Reinigungsmedium der Spurrinne 15 entnimmt. Nachdem das abgesaugte reinigungsmedium mittels eines Siebs 53 gereinigt wurde, wird dieses mittels einer motorgetriebenen Pumpe 59 Düsen 61 zugeführt, die das Reinigungsmedium auf die Reinigungswalzen 43 oder direkt auf das Zweirad sprühen. Im Grundkreislauf können zwischen dem Sieb 53 und der Pumpe 59 ein Absperrventil 55 zur Unterbrechung des Grundkreislaufs und eine Absperrklappe 57 zur Sicherstellung der Strömungsrichtung des Grundkreislaufs angeordnet sein. Nach Austritt aus den Düsen 61 fällt das Reinigungsmedium in Schwerkraftrichtung auf den Boden 36 des Gehäuses 34 und sammelt sich wieder in der Spurrinne 15. Damit ist der Grundkreislauf abgeschlossen. Zusätzlich kann von Behältern 63 und 65 Klarwasser und noch unbenutztes Reinigungsmedium über ein Dreiwegeventil 67, mittels einer weiteren motorgetriebenen Pumpe 69, weiteren Düsen 71 zugeführt und auf die Reinigungswalzen 43 oder direkt auf das Zweirad gesprüht werden. Entsprechend fallen zusätzliches Wasser und Reinigungsmedium in Schwerkraftrichtung auf den Boden 36 und sammeln sich ebenso in der Spurrinne 15, so dass diese nun ebenso dem Grundkreislauf zur Verfügung stehen. Zusätzlich kann aus einem weiteren nicht dargestellten Behälter beispielsweise ein Konservierungsmittel über ein Ventil von der Pumpe 69 zu den Düsen 71 gepumpt werden. Des Weiteren kann auf einem zu dem Niveau des Überlauf 49 niedrigeren Niveau der Spurrinne 15 Reinigungsmedium nach Öffnen eines weiteren Ventils 75 abgeleitet und von einem weiteren Sieb 73 gesiebt und mittels eines Trichters 77 in einem Schlemmfilterbehälter 79 eingebracht und gefiltert wieder zurück in die Spurrinne 15 geleitet werden. Das mittels des Schlemmfilters im Schlemmfilterbehälter 79 abgeschiedene Schlammwasser kann dann abschließend einem Schlammwasserbehälter 81 zur weiteren Aufbereitung und Trocknung zugeführt werden.

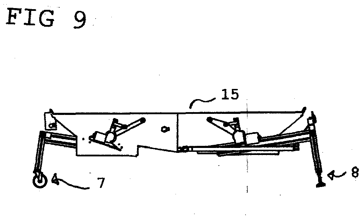

Figur 9 zeigt eine Seitenansicht eines weiteren Ausführungsbeispiels einer erfindungsgemäßen Vorrichtung. Bezugszeichen 15 bezeichnet einen länglichen Behälter zur Aufnahme des zu reinigenden Zweirades, wobei der Behälter als Spurrinne 15 ausgebildet ist. An deren einen Längsseite ist eine drehbar gelagerte Rolle 7 und an der anderen gegenüberliegenden Längsseite der Spurrinne 15 sind zwei Standfüsse 8 ausgebildet. Auf diese Weise ist die Vorrichtung an mindestens drei Auflagepunkten stabil positioniert. Mittels Anheben der beiden Standfüsse 8 kann die Vorrichtung auf einfache Weise auf der Rolle 7 in eine beliebige Position bewegt werden.

Die hier dargestellten Ausführungsformen der Erfindung sind lediglich Ausführungsbeispiele.

## Patentansprüche

1. Vorrichtung zum Reinigen eines ein erstes Rad mit einer ersten Radrotationsachse und ein zweites Rad mit einer zweiten Radrotationsachse aufweisenden Zweirades, mit- einem Gehäuse (34) mit einem Boden (36), einer Decke (37), zwei Seitenwänden (39) und einer ersten Stirnwand (41a) und einer zweiten Stirnwand (41b);
- einer Reinigungseinrichtung, die mindestens zwei beidseitig des Zweirades positionierte, rotierbare bürstenartige Reinigungswalzen (43) mit diesen zugeordneten Sprüh- und/oder Trocknungseinrichtungen (45) aufweist; wobei die Reinigungswalzen und die Sprüh- und/oder Trocknungseinrichtungen gemeinsam mittels eines auf einer parallel zu der Zweiradlängsachse verlaufenden Längsschiene (47) bewegbaren Horizontalschlittens seitlich entlang des Zweirades verfahrbar sind; wobei am Gehäuse (34) eine Raddreheinrichtung (5) fixiert ist, die das erste Rad um die erste Radrotationsachse und das zweite Rad um die zweite Radrotationsachse des in einer Zweirad-Reinigungsposition innerhalb des Gehäuses positionierten Zweirades dreht **dadurch gekennzeichnet, dass**
die Längsschiene (47) in Schwerkraftrichtung unterhalb des Bodens (36) des Gehäuses (34) angeordnet ist und die Decke (37) das Zweirad fixiert, wobei die Decke (37) in einem Bereich entlang einer Gehäuselängsachse in einem Mittelbereich (31) einer Gehäusequerachse zumindest teilweise geöffnet ist und entlang eines Randbereichs des offenen Bereichs zumindest teilweise Bürsten (33) angeordnet sind.

2. Vorrichtung nach Anspruch 1,
**dadurch gekennzeichnet, dass**
die Raddreheinrichtung (5) eine Mehrzahl von entlang der Zweiradlängsachse in dem Boden (36) des Gehäuses (34) um quer zur Zweiradlängsachse orientierte Rollenrotationsachsen drehend gelagerte motorangetriebene Rollen (7) aufweist, die das erste und das zweite Rad tragen und drehen.

3. Vorrichtung nach Anspruch 2,
**dadurch gekennzeichnet, dass**
die Rollen (7) in einer entlang der Zweiradlängsachse in dem Boden (36) des Gehäuses (34) ausgebildeten Spurrinne (15) positioniert sind, entlang der das Zweirad geführt und in der ein Reinigungsmedium aufgenommen ist.

4. Vorrichtung nach Anspruch 3,
**dadurch gekennzeichnet, dass**
die Spurrinne (15) mindestens einen Ultraschallerzeuger, insbesondere einen Piezoaktor (19), aufweist, der mittels Ultraschallenergie in das aufgenommene Reinigungsmedium eingetauchte Bereiche des ersten und des zweiten Rades reinigt.

5. Vorrichtung nach einem der vorangehenden Ansprüche,
**dadurch gekennzeichnet, dass**
am Gehäuse (34) eine Reinigungs- und/oder Schmierungseinrichtung (21) fixiert ist, die eine Ritzelkassette und/oder ein Schaltwerk und/oder eine Kette des Zweirades reinigt und/oder schmiert.

6. Vorrichtung nach Anspruch 5,
**dadurch gekennzeichnet, dass**
die Reinigungs- und/oder Schmierungseinrichtung (21) eine in dem Boden (36) des Gehäuses (34) auf einer Seite der ersten Stirnwand (41a) um eine quer zur Zweiradlängsachse orientierte Walzenrotationsachse drehend gelagerte mittels eines Motors (25) angetriebene Reinigungs- und/oder Schmierungswalze (23) aufweist, mit der die Ritzelkassette und/oder das Schaltwerk und/oder die Kette des rückwärts von der Seite der zweiten Stirnwand (41b) in das Gehäuse (34) eingebrachten Zweirades mechanisch in Kontakt gebracht ist/sind.

7. Vorrichtung nach Anspruch 5,
**dadurch gekennzeichnet, dass**
die Reinigungs- und/oder Schmierungseinrichtung (21) einer am Gehäuse (34) um eine quer zur Zweiradlängsachse orientierte Walzenrotationsachse drehend gelagerte mittels eines Motors (25) angetriebene Reinigungs- und/oder Schmierungswalze (23) aufweist, die mit der Ritzelkassette und/oder dem Schaltwerk und/oder der Kette des vorwärts von der Seite der zweiten Stirnwand (41b) in das Gehäuse (34) eingebrachten Zweirades bei geschlossener zweiter Stirnwand (41b) mechanisch in Kontakt gebracht ist/sind.

8. Vorrichtung nach einem der vorangehenden Ansprüche,
**dadurch gekennzeichnet, dass**
jeweils zwei zueinander achsensymmetrisch zur Zweiradlängsachse beidseitig des Zweirades positionierte Reinigungswalzen (43) an einem Querelement (3) des Horizontalschlittens derart drehbar gelagert sind, dass sich ein Abstand der beiden Rotationsachsen der Reinigungswalzen (43) zueinander in Schwerkraftrichtung nach unten verkleinert.

9. Vorrichtung nach einem der vorangehenden Ansprüche,
**dadurch gekennzeichnet, dass**
die Reinigungswalzen (43) und die Sprüh- und/oder Trocknungseinrichtungen gemeinsam mittels mindestens zweier auf mindestens zwei vertikalen Schienen (1) bewegbaren Vertikalschlitten seitlich vertikal entlang des Zweirades verfahrbar sind.

## Claims

1. A device for cleaning a two-wheeled vehicle that has a first wheel with a first wheel rotation axis and a second wheel with a second wheel rotation axis, said device having: a housing (34) with a bottom (36), a top (37), two side walls (39), a first end wall (41a), and a second end wall (41b);
- a cleaning device that has at least two rotatable brush-like cleaning rollers (43) that are positioned on both sides of the two-wheeled vehicle, with spraying and/or drying devices (45) associated therewith; the cleaning rollers and the spraying and/or drying devices can be moved jointly by means of a horizontal carriage that can be moved laterally along the two-wheeled vehicle on a longitudinal rail (47) extending parallel to the longitudinal axis of the two-wheeled vehicle; the housing (34) has a wheel-rotating device (5) mounted on it, which rotates the first wheel around the first wheel rotation axis and the second wheel around the second wheel rotation axis of the two-wheeled vehicle that is positioned in a two-wheeled vehicle-cleaning position inside the housing, **characterized in that**
the longitudinal rail (47) is situated below the bottom (36) of the housing (34) in the direction of the force of gravity and the top (37) immobilizes the two-wheeled vehicle; the top (37) is at least partially open in a region along a longitudinal axis of the housing, in a center region (31) of a transverse axis of the housing and brushes (33) are arranged along at least part of an edge region of the open region.

2. The device according to claim 1,
**characterized in that**
the wheel-rotating device (5) has a plurality of motor-driven rollers (7) that are arranged along the longitudinal axis of the two-wheeled vehicle in the bottom (36) of the housing (34) and are supported so that they are able to rotate around roller rotation axes oriented transversely relative to the longitudinal axis of the two-wheeled vehicle, which rollers support and rotate the first and second wheels.

3. The device according to claim 2,
**characterized in that**
the rollers (7) are positioned in a guide channel (15) extending along the longitudinal axis of the two-wheeled vehicle in the bottom (36) of the housing (34), along which the two-wheeled vehicle is guided and in which a cleaning medium is contained.

4. The device according to claim 3,
**characterized in that**
the guide channel (15) has at least one ultrasound generator, in particular a piezoelectric actuator (19), which cleans regions of the first and second wheels that are submerged in the contained cleaning medium by means of ultrasound energy.

5. The device according to one of the preceding claims,
**characterized in that**
the housing (34) has a cleaning and/or lubricating device (21) affixed to it, which cleans and/or lubricates a cog set and/or derailleur and/or chain of the two-wheeled vehicle.

6. The device according to claim 5,
**characterized in that**
the cleaning and/or lubricating device (21) has a cleaning and/or lubricating roller (23), which is driven by means of a motor (25) and is supported in the bottom (36) of the housing (34) to one side of the first end wall (41a) so that it is able to rotate around a roller rotation axis oriented transversely relative to the longitudinal axis of the two-wheeled vehicle, which roller is mechanically brought into contact with the cog set and/or derailleur and/or chain of the two-wheeled vehicle, which has been introduced in a backward direction into the housing (34) from the end with the second end wall (41b).

7. The device according to claim 5,
**characterized in that**
the cleaning and/or lubricating device (21) has a cleaning and/or lubricating roller (23), which is driven by means of a motor (25) and is supported on the housing (34) so that it is able to rotate around a roller rotation axis oriented transversely relative to the longitudinal axis of the two-wheeled vehicle, which roller is mechanically brought into contact with the cog set and/or derailleur and/or chain of the two-wheeled vehicle, which has been introduced in a forward direction into the housing (34) from the end with the second end wall (41b), once the second end wall (41b) is closed.

8. The device according to one of the preceding claims,
**characterized in that**
each pair of cleaning rollers (43), which are positioned on both sides of the two-wheeled vehicle and axially symmetrical to each other relative to the longitudinal axis of the two-wheeled vehicle, are supported in rotary fashion on a transverse element (3) of the horizontal carriage in such a way that a distance of the two rotation axes of the cleaning rollers (43) from each other decreases toward the bottom in the direction of the force of gravity.

9. The device according to one of the preceding claims,
**characterized in that**
the cleaning rollers (43) and the spraying and/or drying devices can be moved jointly by means of at least two vertical carriages that can be moved laterally in a vertical direction along the two-wheeled vehicle on at least two vertical rails (1).

## Revendications

1. Dispositif de nettoyage d'un véhicule à deux roues comportant une première roue pourvue d'un premier axe de rotation et une seconde roue pourvue d'un second axe de rotation, comprenant un boîtier (34) pourvu d'un fond (36), d'un plafond (37), de deux parois latérales (3) et d'une première paroi frontale (41a) et d'une seconde paroi frontale (41b) ;
- un moyen de nettoyage qui comprend au moins deux rouleaux de nettoyage rotatifs (43) en forme de brosses, positionnés de part et d'autre du véhicule à deux roues et pourvus de moyens d'arrosage et/ou de séchage (45) qui leur sont associés ; dans lequel les rouleaux de nettoyage et les moyens d'arrosage et/ou de séchage sont mobiles conjointement latéralement le long du véhicule à deux roues au moyen d'un chariot horizontal déplaçable sur un rail longitudinal (47) parallèle à l'axe longitudinal du véhicule à deux roues ;
dans lequel un moyen de rotation de roue (5) est fixé sur le boîtier (34), moyen qui fait tourner la première roue autour du premier axe de rotation et la seconde roue autour du second axe de rotation du véhicule à deux roues positionné dans une position de nettoyage de véhicule à l'intérieur du boîtier, **caractérisé en ce que**
le rail longitudinal (47) est agencé, en direction de la pesanteur, au-dessous du fond (36) du boîtier (34), et le plafond (37) fixe le véhicule à deux roues, le plafond (37) étant au moins partiellement ouvert dans une zone le long d'un axe longitudinal du boîtier dans une zone centrale (31) d'un axe transversal du boîtier, et des brosses (33) sont agencées au moins partiellement le long d'une région de bord de la zone ouverte.

2. Dispositif selon la revendication 1,
**caractérisé en ce que**
le moyen de rotation de roue (5) comprend une pluralité de galets (7) entraînés par moteur, montés en rotation autour d'axes de rotation de galet orientés transversalement à l'axe longitudinal du véhicule à deux roues le long de l'axe longitudinal du véhicule à deux roues dans le fond (36) du boîtier (34), galets qui portent et font tourner les première et seconde roues.

3. Dispositif selon la revendication 2,
**caractérisé en ce que**
les galets (7) sont positionnés dans une rainure (15) ménagée le long de l'axe longitudinal du véhicule à deux roues dans le fond (36) du boîtier (34), rainure le long de laquelle le véhicule à deux roues est guidé et dans laquelle est reçu un fluide de nettoyage.

4. Dispositif selon la revendication 3,
**caractérisé en ce que**
la rainure (15) comprend au moins un générateur d'ultrasons, en particulier un piézo-actionneur (19) qui nettoie au moyen d'une énergie ultrasonore les zones des première et seconde roues plongées dans le fluide de nettoyage reçu.

5. Dispositif selon l'une des revendications précédentes,
**caractérisé en ce que**
sur le boîtier (34) est fixé un moyen de nettoyage et/ou de lubrification (21) qui nettoie et/ou lubrifie un ensemble de jeu de pignons et/ou un dérailleur et/ou une chaîne du véhicule à deux roues.

6. Dispositif selon la revendication 5,
**caractérisé en ce que**
le moyen de nettoyage et/ou de lubrification (21) comprend un rouleau de nettoyage et/ou de lubrification (23) qui est monté en rotation autour d'un axe de rotation de rouleau, orienté transversalement à l'axe longitudinal du véhicule à deux roues, dans le fond (36) du boîtier (34) sur un côté de la première paroi frontale (41a), et qui est entraîné à l'aide d'un moteur (25), rouleau avec lequel l'ensemble de jeu de pignons et/ou le dérailleur et/ou la chaîne du véhicule à deux roues, inséré en arrière depuis le côté de la seconde paroi frontale (41b) dans le boîtier (34), est/sont mis en contact mécanique.

7. Dispositif selon la revendication 5,
**caractérisé en ce que**
le moyen de nettoyage et/ou de lubrification (21) comprend un rouleau de nettoyage et/ou de lubrification (23) qui est monté en rotation autour d'un axe de rotation de rouleau, orienté transversalement à l'axe longitudinal du véhicule à deux roues, sur le boîtier (34) et qui est entraîné à l'aide d'un moteur (25), rouleau(x) qui est/sont mis en contact mécanique avec l'ensemble de jeu de pignons et/ou avec le dérailleur et/ou avec la chaîne du véhicule à deux roues, inséré en avant depuis le côté de la seconde paroi frontale (41b) dans le boîtier (34), la seconde paroi frontale (41b) étant fermée.

8. Dispositif selon l'une des revendications précédentes,
**caractérisé en ce que**
deux rouleaux de nettoyage (43) respectifs positionnés à symétrie axiale par rapport à l'axe longitudinal du véhicule à deux roues de part et d'autre du véhicule à deux roues sont montés en rotation sur un élément transversal (3) du chariot horizontal de telle sorte qu'une distance des deux axes de rotation des rouleaux de nettoyage (43) l'un par rapport à l'autre diminue mutuellement vers le bas en direction de la pesanteur.

9. Dispositif selon l'une des revendications précédentes,
**caractérisé en ce que**
les rouleaux de nettoyage (43) et les moyen d'arrosage et/ou de séchage sont mobiles conjointement, latéralement verticalement le long du véhicule à deux roues, à l'aide d'au moins deux chariots verticaux, déplaçables sur au moins deux rails verticaux (1).
